(19) Europäisches Patentamt

European Patent Office

Office européen des brevets

(11) **EP 1 228 414 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **00987061.9**

(22) Anmeldetag: **27.10.2000**

(51) Int Cl.[7]: **G06F 3/00**

(86) Internationale Anmeldenummer:
**PCT/DE00/03843**

(87) Internationale Veröffentlichungsnummer:
**WO 01/033323 (10.05.2001 Gazette 2001/19)**

(54) **RECHNERUNTERSTÜTZTES VERFAHREN ZUR BERÜHRUNGSLOSEN, VIDEOBASIERTEN BLICKRICHTUNGSBESTIMMUNG EINES ANWENDERAUGES FÜR DIE AUGENGEFÜHRTE MENSCH-COMPUTER-INTERAKTION UND VORRICHTUNG ZUR DURCHFÜHRUNG DES VERFAHRENS**

COMPUTER-AIDED VIDEO-BASED METHOD FOR CONTACTLESSLY DETERMINING THE DIRECTION OF VIEW PERTAINING TO AN EYE OF A USER FOR THE EYE-GUIDED INTERACTION BETWEEN HUMAN BEINGS AND COMPUTERS AND A DEVICE FOR CARRYING OUT SAID METHOD

PROCEDE ASSISTE PAR ORDINATEUR DE DETERMINATION SANS CONTACT PAR MOYENS VIDEO DE LA DIRECTION DE VISION DE L'OEIL D'UN UTILISATEUR POUR L'INTERACTION HOMME-ORDINATEUR PILOTEE PAR L'OEIL, ET DISPOSITIF POUR LA MISE EN OEUVRE DE CE PROCEDE

(84) Benannte Vertragsstaaten:
**DE FR GB**

(30) Priorität: **30.10.1999 DE 19953835**

(43) Veröffentlichungstag der Anmeldung:
**07.08.2002 Patentblatt 2002/32**

(73) Patentinhaber: **Heinrich-Hertz-Institut für Nachrichtentechnik Berlin GmbH 10587 Berlin (DE)**

(72) Erfinder:
• **LIU, Jin**
**12357 Berlin (DE)**
• **PASTOOR, Siegmund**
**10823 Berlin (DE)**

(74) Vertreter: **Rudolph, Margit et al Heinrich-Hertz-Institut für Nachrichtentechnik Berlin GmbH, Gemeinsamer Patentservice, Hausvogteiplatz 5-7 10117 Berlin (DE)**

(56) Entgegenhaltungen:
**EP-A- 0 055 338       EP-A- 0 631 222**
**GB-A- 2 116 334**

• **EPWORTH R: "EYE MOVEMENTS, FOR A BIDIRECTIONAL HUMAN INTERFACE" ICL TECHNICAL JOURNAL,GB,PETER PERGRINUS LTD. HITCHIN, Bd. 7, Nr. 2, 1. November 1990 (1990-11-01), Seiten 384-411, XP000176706**
• **K. TALMI , J. LIU: "Eye and gaze tracking for visually controlled interactive stereoscopic displays" SIGNAL PROCESSING : IMAGE COMMUNICATION, Nr. 14, 1999, Seiten 799-810, XP002167188 in der Anmeldung erwähnt**

**Beschreibung**

Die Erfindung bezieht sich auf ein rechnerunterstütztes Verfahren zur berührungslosen, videobasierten Blickrichtungsbestimmung eines Anwenderauges für die augengeführte Mensch-Computer-Interaktion nach dem Comea-Reflex-Verfahren, mit dem blickrichtungsabhängige Augenvektoren zwischen dem detektierbaren Pupillenmittelpunkt und durch gerichtete Infrarotbeleuchtung erzeugbaren, ebenfalls detektierbaren Reflexpunkten auf der Augenhornhaut bestimmt werden, mit einer Kalibrierung auf zumindest einen auf dem Bildschirm darstellbaren Kalibrierpunkt zur Bestimmung einer Blickrichtungsfunktion und einer in Abhängigkeit von der Erzeugung von Bildobjekten und mehreren Reflexpunkten durchzuführenden Rekalibrierung zur Korrektur systematischer Messfehler und auf eine Anordnung zur Durchführung des Verfahrens.

Die fortschreitende Integration informationstechnischer Systeme bietet den Computer-Nutzern ein weites Spektrum neuartiger Dienste und den Zugang zu nahezu unüberschaubaren multimedialen Datenbeständen. Mit den erweiterten Nutzungsmöglichkeiten des Computers werden zunehmend höhere Anforderungen an die Gestaltung der Anwenderschnittstelle gestellt. Gesucht sind Lösungen, die Nutzern mit unterschiedlichsten Vorkenntnissen eine souveräne Beherrschung des Computers erlauben. Hierbei ist eine weiterentwickelte Anwenderschnittstelle von besonderer Bedeutung, die das Wahrnehmungsvermögen des Menschen und das natürliche Repertoire an Interaktionsmöglichkeiten besser unterstützt als die heutigen grafischen Schnittstellen mit Handmaus und Tastatur. Schlüsselelemente sind die räumliche Darstellung der Informationen auf einem brillenlosen 3D-Display, die Unterstützung des aktiven Sehens durch Beeinflussung der Informationsdarstellung über Kopfposition und Blickrichtung und nicht-befehlsbasierte, von einem Interface-Agenten aus dem Blickverhalten antizipierte Interaktionen.

Hinsichtlich des Benutzerwunsches nach schneller kognitiver Orientierung, souveräner Handhabung und persönlicher Kontrolle der neuartigen Systeme existieren verschiedene Lösungsansätze auf der Grundlage neuer Darstellungs- und Interaktionstechniken. Dazu zählt insbesondere die intuitive Direktmanipulation durch aktives Sehen und Handgesten. Wie beim natürlichen Sehen kann sich die Betrachtungsperspektive bei Kopfbewegungen verändern. Vordergrundobjekte können auf diese Weise zur temporären Einsichtnahme in verdeckte Ebenen seitlich weggeschoben werden. Durch Detektion der Blickrichtung bzw. des Fixationspunkts werden zusätzliche visuelle Interaktionen möglich. Beispielsweise kann der Blick auf ein Medienobjekt zum Einblenden von Kontextinformationen verwendet werden. Eine an den Fixationspunkt gekoppelte synthetische Schärfentiefe kann dem Anwender helfen, die Aufmerksamkeit auf das gewählte Medienobjekt zu konzentrieren. Darüber hinaus kann die Blickrichtung genutzt werden, um Bildschirmobjekte durch visuelles Fixieren zu adressieren, zu bewegen oder zu zoomen (Augenmaus-Funktion).

Verfahren zur Messung der Blickrichtung wurden in der Vergangenheit überwiegend für Laborexperimente oder für Zwecke der medizinischen Diagnostik und weniger für Anwendungen in der Mensch-Computer-Interaktion entwickelt. Die technischen Möglichkeiten sind seit den siebziger Jahren im Wesentlichen bekannt und können grundsätzlich in berührungslose und nichtberührungslose Verfahren unterschieden werden. Die nicht-berührungslosen erfordern z.B. das Anbringen von Hautelektroden im Gesicht des Anwenders oder das Tragen von speziellen Brillen oder Kontaktlinsen. Für die Mensch-Computer-Interaktion sind videobasierte Techniken am besten geeignet. Dazu wird ein Bild des Auges möglichst formatfüllend von einer Videokamera aufgenommen und nach verschiedenen Kriterien ausgewertet. Für eine berührungslose Messung wird die Blickmesskamera in der Nähe des Bildschirms aufgestellt. Eine Teleoptik ggfs. mit einem Nachführsystem, das die Kamera auch bei Kopfbewegungen auf das Auge ausrichtet, sorgt in diesem Falle für das formatfüllende Bild des Auges. Ausgewertet werden Bewegungen der Pupille bezüglich eines Bezugssystems, z.B. bezüglich der Mitte des Kamerabildes. Für genaue Messungen wird das Auge mit schwachem, nicht blendendem Infrarotlicht beleuchtet, um eine gute Ausleuchtung der Augenregion und gezielt Reflexionen an Grenzschichten, z.B. an der Oberfläche des Auges und an der Rückseite der Augenlinse (Purkinje-Reflexe) zu erzeugen, deren Lage in Relation zum Zentrum der Pupille ausgewertet werden. Die stärkste Reflexion findet an der Hornhautoberfläche (Comea) statt. Die sogenannte "Cornea-Reflex-Methode" (vgl. "Bildverarbeitung durch das visuelle System", A.Kom, Springer Verlage 1982, S. 126 ff), die die Tatsache ausnutzt, dass die Hornhaut einfallendes Licht reflektiert, das an der Oberfläche als Glanzpunkt detektiert werden kann ("Comea-Reflex"), ermöglicht ohne Nachkalibrierung über einen längeren Zeitraum präzise berührungslose Messungen. Die Blickmesskamera wird durch Signale eines Head-Trackers auf ein Auge des Anwenders ausgerichtet und folgt diesem Auge auch bei Kopfbewegungen.

Im Verlauf der Bildauswertung wird zunächst die Pupille lokalisiert, indem nach dem Least-Squares-Verfahren eine kreisförmige Konturlinie der Pupille iterativ angenähert wird. Danach wird der Reflexpunkt durch eine einfache Schwellwertoperation als Zentrum der größten, sehr hellen Region in einem etwas erweiterten Umfeld der Pupille ermittelt. Damit ist der sogenannte "Augenvektor" bestimmt, der vom Zentrum der Pupille auf das Zentrum des Reflexpunktes zeigt. Bei jeder Blickrichtungsänderung ändert sich der Augenvektor zwischen dem Pupillen- und dem Reflexmittelpunkt monoton zur Blickrichtung. Die Größe hängt von der Geometrie des individuellen Auges ab (Krümmungsradii der Hornhaut und des Augapfels) und kann durch eine monotone Funktion (Blickrichtungsfunktion) beschrieben werden. Die Blickrichtungsfunktion muss durch die Kalibrierung ermittelt werden. Nach der Kalibrierung, bei der der Anwender nacheinander z.B. fünf Kalibrierpunkte als punktförmige Gegenstandsobjekte auf dem Bildschirm fixieren muss, können der Augenvektoren in Relation zu den Kalibrierpunkten berechnet werden. Je mehr Kalibrierpunkte dabei in festgelegter Betrachtungsreihenfolge verwendet werden und je länger die Fixationszeit durch den jeweiligen Anwender ist, desto genauer können diese erstellt werden. Dieser komplexe Vorgang ist bei bekannten Verfahren zu Beginn jeder individuellen Anwendung durchzuführen und erfordert vom Anwender eine hohe Aufmerksamkeit und viel Geduld. Ein Interpolationsmodell stellt dabei einen Zusammenhang zwischen den X- und Y-Bildschirmkoordinaten der Kalibrierpunkte und den entsprechenden x- und y-Werten der gemessenen Augenvektoren (im Kamerabild) bei der Fixation des jeweiligen Kalibrierpunktes her. Die individuell angepassten Parameterwerte des Modells werden gespeichert und dienen anschließend bei der Blickmessung zur Interpolation der Bildschirmkoordinatenwerte bei der Fixation beliebiger Punkte des Bildschirms. Der Kalibriervorgang dauert je nach Anzahl der Kalibrierpunkte und Konzentrationsfähigkeit des Anwenders mindestens ein bis zwei Minuten.

Bei Kopfbewegungen ändert sich der Augenvektor und somit die berechnete Blickrichtung auch dann, wenn der Nutzer den Fixationspunkt beibehält. Diese Änderung liegt darin begründet, dass der Augapfel gedreht werden muss, um die Ausrichtung der Blicklinie auf den (raumfesten) Fixationspunkt zu gewährleisten. Da die Blickkamera geneigt und geschwenkt werden muss, um das Auge bei Kopfbewegungen in der Bildmitte zu halten, verändert sich außerdem die Flächennormale des Kamerasensors. Eine neu entwickelte Transformationstechnik (vgl. DE 197 36 995.2 A1 bzw. Aufsatz "Determination of the Point of Fixation in a Head-Fixed Coordinate System", Liu, 14th Intern. Conf. on Pattern Recognition, 16-20 August, 1998, Brisbane, Australia) ermöglicht eine effektive Korrektur dieser (systematischen) Messfehler. Hierbei wird ein bewegliches, auf die Kopfposition des Anwenders bezogenes Koordinatensystem verwendet. Als Koordinatenursprung für die Messdatentransformation wird der Augenmittelpunkt gewählt. Durch eine Rotation, eine Skalierung und eine Translation kann die im Kamerabild gemessene Blickrichtung in die 3D-Koordinaten des Fixationspunktes umgerechnet werden, wobei die Freiheitsgrade des Messsystems und des Displays nicht eingeschränkt sind. Dadurch sind nur wenige Transformationsschritte zur Kompensation von Kopfbewegungen erforderlich. Die vorstehenden Erläuterungen stammen auch aus dem Aufsatz "Augenmaus & Co.- Entwicklung einer neuartigen Anwenderschnittstelle für Multimedia-Computer", Liu, Pastoor, ZMMS-Spektrum (ISBN 3-932490-52-5) 1999; Band 8, Seiten 56 - 70, und aus dem Schlussbericht zum Förderprojekt 01BK410/8 (BLICK), 30.04.99, Seiten 57 - 61).

Bevor im Weiteren näher auf einzelne Kalibrierverfahren eingegangen werden soll, wird zunächst eine Definition des Begriffes "Kalibrierung" eingeschoben. Gerade im Zusammenhang mit dem Gebrauch dieses Begriffes entstehen oft Unklarheiten, da er fälschlicherweise auch für Kompensations- und Korrekturvorgänge bei Messverfahren eingesetzt wird. Der Kalibriervorgang ist als "Einmessvorgang" einer Messanordnung zu verstehen, bei dem ein relativer, reproduzierbarer Zusammenhang zwischen den Ausgangs- und den individuellen Eingangsgrößen festgestellt wird. Im Gegensatz dazu ist der Eichvorgang als "Abmessvorgang" zu bezeichnen, bei dem eine Überprüfung und absolute Abstimmung der Messgenauigkeit und -sicherheit von Messgeräten stattfindet. In bekannten Verfahren auftretende Kompensationsvorgänge, beispielsweise die Kompensation der Kopfbewegung bei der Blickrichtungsbestimmung, oder Korrekturvorgänge, beispielsweise die Messwertkorrektur bei einer Abstandsänderung des Anwenders in der Raumtiefe zur Blickmesskamera, sind keine Kalibriervorgänge. Hier von "Nach- oder Rekalibrieren" zu sprechen, ist messtechnisch gesehen nicht korrekt.

Bei einigen aus dem Stand der Technik bekannten Anwendungen auf dem Gebiet der videobasierten Blickrichtungsbestimmung sind keine expliziten Kalibnervorgänge vorgesehen. Bei einer Kamera mit einem-blickgesteuerten Autofokus gemäß der US-PS 5,678,066 kann der individuelle Anwender keinen Kalibriervorgang durchführen. Der Auswahlbereich lässt sich hier entsprechend einer sehr groben Erfassung der Blickrichtung lediglich in drei Regionen aufteilen. Eine Kamera gleichen Typs mit einer verbesserten Objektiv-Spiegel-Anordnung und einem weiterentwickelten Detektionsverfahren wird auch in der US-PS 5,875,121 beschrieben. Auch hier ist keine individuelle Kalibrierung möglich, die Blickmessung unterscheidet nur in die vier Hauptrichtungen "links", "rechts", "oben" und "unten". Eine Verbesserung der Messgenauigkeit ohne Kalibrierung ergibt sich, wenn der Anwenderkopf fixiert ist, sodass nur noch die physiologischen Augencharakteristika einen systematischen Fehlereinfluss haben. Eine solche Maßnahme wird in einem Verfahren zur Gesichtsfeldmessung bei Patienten gemäß der US-PS 5,220,361 beschrieben. Zur zumindest teilweisen Kompensation des systematischen Messfehlers werden hier insgesamt vier Reflexpunkte auf der Hornhaut erzeugt, dadurch kann der Augen-Sensor-Abstand ermittelt werden. Eine Berücksichtigung der individuellen Augengeometrie (z.B. Augenradius) erfolgt jedoch nicht. Insgesamt muss festgestellt werden, dass Verfahren ohne Kalibrierung die Blickrichtung mit einer wesentlich geringeren Genauigkeit vermessen und als Ergebnis nur eine grobe Abschätzung der Blickrichtung liefern können. Das ist aber für viele Anwendungen unzureichend. Es handelt es sich hierbei also um "einfache Systeme" ohne individuelle Kalibrierung, bei denen die verallgemeinerten Parameter von "Standardaugen" verwendet werden. Eine ausreichende Genauigkeit wird nur erreicht, wenn die Anwenderaugen zufällig mit diesen Standardaugen übereinstimmen.

Dagegen zu unterscheiden sind die "aufwendigen Systeme", bei denen eine zeit- und arbeitsaufwendige individuelle Kalibrierung für jeden einzelnen Anwender durchgeführt wird. Diese unterscheiden sich in der Anzahl und der Ordnung der verwendeten Kalibrierpunkte. Die Genauigkeit steigt im Allgemeinen mit der Anzahl der verwendeten Kalibrierpunkte. Aus der US-PS 5,634,141 ist eine Kamera mit einem blickgesteuerten Autofokus bekannt, bei der ein individueller Kalibriervorgang durchführbar ist. Hierzu sind zwei horizontal angeordnete Kalibrierpunkte im Sucherbereich der Kamera vorgesehen. Von sechs, um den Sucher herum angeordneten Infrarotdioden werden je nach der Kamerastellung und des Anwenderzustands zwei paarweise eingesetzt, um Reflexpunkte auf dem Anwenderauge zu erzeugen, die der Messung seines individuellen Pupillendurchmessers und der unter verschiedenen Annahmen resultierenden Berechnung der Augenachse (Kausalitätsprüfung) unter Zugrundelegung von standardisierten Augapfelparametem dienen. Auch hierbei reicht die Genauigkeit der Kalibrierung jedoch nur dazu aus, Blickbereiche - hier drei Bereiche in horizontaler Richtung-festzulegen. Um die Aufwendigkeit des Kalibriervorganges etwas zu reduzieren, ist bei dieser Kamera eine Einspeicherung von verschiedenen Kalibrierdatensätzen möglich, beispielsweise für unterschiedliche Anwender oder für einen Anwender mit und ohne Brille. Im Gebrauchsfall kann dann der entsprechende Datensatz vom Anwender aufgerufen werden. Abgesehen jedoch davon, dass es für die Messgenauigkeit extrem wichtig ist, dass der richtige, zum Anwender passende Datensatz aufgerufen wird, ist eine automatische Anpassung an die individuellen Augendaten nicht gewährleistet. Um Veränderungen berücksichtigen zu können, ist eine erneute Durchführung des gesamten Kalibriervorganges erforderlich.

Aus dem Aufsatz von R. Epworth: "Eye Movements, for A Bidirectional Human Interface" (ICL Technical Journal 7 (1990) November, No. 2, Oxford, GB, pp 384-411) sind verschiedene Techniken zur Messung von Augenbewegungen bekannt. Zur Erreichung genauer Messergebnisse muss ein Blickmesssystem vor der Benutzung kalibriert werden. Darüber hinaus muss eine ständige Anpassung an das individuelle Anwenderauge erfolgen, weil sich die Augen der Menschen hinsichtlich geometrischer und optischer Parameter, die für den Messvorgang von Bedeutung sind, unterscheiden. Anschließend wird der Vorgang der Kalibrierung auf ein spezielles, aktuell nutzendes Anwenderauge beschrieben. Dazu fixiert der Anwender eine-Folge Marken, die kurzzeitig auf dem elektronischen Bildschirm an vordefinierten Orten erscheinen, wobei dieser Vorgang eine hohe Konzentration des Anwenders erfordert. Dabei wird ein Zusammenhang zwischen der Blickrichtung bei der Fixation des jeweiligen Punktes und den Messdaten des Systems hergestellt. Dieser Zusammenhang wird in einem Korrekturalgorithmus ("correction algorithm") gespeichert. Bei der späteren Benutzung wird dieser Algorithmus verwendet, um aus den Messdaten des Anwenders, für dessen Augen das System kalibriert wurde, auf die Blickrichtung zu schließen. Zur Kompensation möglicher Drifteffekte kann der an den Anwender angepasste Algorithmus später nachkorrigiert werden, sofern zu gegebenen Zeitpunkten bekannt ist, wohin der Anwender gerade schaut. Weiterhin wird in dem Aufsatz in allgemeiner Form beschrieben, welche Bildmerkmale bei der Comea-Reflex-Methode ausgewertet werden (Zentrum der Pupillen, Reflexpunkt auf der Comea). Schließlich werden die gemachten Ausführungen auf eine am Kopf des Anwenders befestigte Apparatur zur Messung der Blickrichtung nach der Limbus-Tracking-Methode bezogen. Unter der Überschrift "Auto-calibration" wird wiederum der Kalibrationsvorgang beschrieben, wobei der Anwender keine Potentiometer justieren muss, sondern die Abgleichvorgänge durch einen Rechner erfolgen. Da das bekannte Verfahren bei Kopfbewegungen Messfehler produziert, ist eine manuelle Rekalibrierung bei veränderter Kopfposition vorgesehen. Dazu wird der vom speziellen Anwender erzeugte "Korrekturalgorithmus" (s.o.) für. das Auge dieses speziellen Anwenders durch einen vom Anwender im Moment der Fixation eines zentralen Fixationspunktes ausgelösten Vorgang (Drücken der Leertaste) nachkorrigiert.

Der aus der europäischen Patentanmeldung EP 0 631 222 A bekannten Vorrichtung liegt die Aufgabe eines blickgesteuerten Computer Interfaces mit einer Vereinfachung der anwender-spezifischen Kalibrierung zugrunde. Es wird in der Einleitung zutreffend festgestellt, dass bekannte Blickmessverfahren eine relativ aufwendige anwenderspezifische Kalibrierung erfordern. Kern der Anmeldung ist jedoch ein Verfahren, mit dem festgestellt werden kann, ob ein Anwender auf einen bestimmten Punkt des Bildschirms schaut oder nicht. Dazu ändern vorgegebene (voraussichtliche Blick-)Punkte auf dem Bildschirm vorübergehend ihre Helligkeit. Wenn der Anwender auf einen derart aufleuchtenden Punkt schaut, passt sich seine Pupille der veränderten Helligkeit an (kleinerer Durchmesser bei größerer Helligkeit). Das video-basierte Blickmessverfahren detektiert den veränderlichen Durchmesser der Pupille und leitet daraus ab, ob der Anwender diesen Punkt präzise angeblickt hat oder nicht. Wenn der Punkt angeblickt wurde, wird diese Information zur Kalibrierung des Messsystems verwendet. Das bekannte Blickmessverfahren selbst basiert auf einer Auswertung der_Lage des Pupillenzentrums im Kamerabild, da sich die Lage der Pupille im Kamerabild sich bei Augenbewegungen verändert. Dabei wird das Auge mit Infrarotlicht beleuchtet. Diese spezielle Beleuchtung dient dazu, die Lage der Pupillenmitte im Kamerabild möglichst einfach und genau zu bestimmen. Die Kalibrierung des Systems, d.h. die Bestimmung des Zusammenhanges zwischen der Lage des Pupillenmittelpunktes im Kamerabild und dem angeblickten Punkt auf dem Bildschirm erfolgt sukzessive während der Benutzung des Systems durch den Anwender (kalibriert wird immer dann, wenn ein aufleuchtendes Bildschirmobjekt angeblickt wird). Eine fortlaufende Nachkalibrierung ist zwingend erforderlich, da auch Kopfbewegungen relativ zur Kamera zu einer Verlagerung des Pupillenbildes führen und daher zunächst vom System fälschlicherweise als Blickänderungen interpretiert werden. Um messbare Veränderungen des Pupillendurchmessers zu erzeugen, muss entweder eine relativ große Fläche aufleuchten (das würde die Kalibriergenauigkeit verschlechtern) oder es muss eine relativ kleine Fläche sehr hell aufleuchten. Über die zu erwartenden Störungen des Anwenders durch die immer wieder beim Anschauen aufleuchtenden Bildschirmobjekte werden in der Anmeldung keine Aussagen getroffen. Über die Störanfälligkeit durch Kopfbewegungen werden ebenfalls keine Angaben gemacht. Gleiches gilt für die Art der Transformationsfunktionen.

Der **Stand der Technik**, von dem die Erfindung ausgeht, wird beschrieben in der DE-OS-197 31 303 A1. Hierbei handelt es sich um ein Verfahren zur kontaktlosen Messung der Blickrichtung mit einer korrigierenden Berücksichtigung von größeren Kopf- und Augenbewegungen, bei dem die Koordinaten von Zielfadenkreuzen für Pupillenmittelpunkt und wenigstens einer komealen Reflexion eines einzigen Anwenders auf mindestens einen Kalibrierpunkt (bei höchster Genauigkeit auf 13 Kalibrierpunkte) kalibriert werden ("Blickrichtungskalibrierung"). Dazu wird die entsprechende Anzahl von Kalibrierpunkten auf dem Bildschirm gezeigt. Der Anwender muss diese Kalibrierpunkte dann ausreichend lange und in vorgegebener Reihenfolge fixieren. Dabei erfolgt eine automatische Kontrolle, ob er lange genug auf das Fixationsziel blickt und diesem folgt. Tut der Anwender dies nicht, wird er zur Wiederholung aufgefordert. Aus den gewonnenen Messdaten für die Pupillenposition, der komealen Reflexionen und den Koordinaten der vorgegebenen Kalibrierpunkte wird dann auf Basis unterschiedlicher mathematischer Modelle und Näherungsverfahren eine Transformationsmatrix (Blickrichtungsfunktion) erstellt, mit der die anschließend gemessenen Koordinaten der Pupille und der komealen Reflexionen in die augenblickliche Blickposition transformiert werden können. Weiterhin ist für dieses bekannte Verfahren eine "automatische Anpassung der Kalibrierdaten" bei horizontalen und vertikalen Abstandänderungen der Anwenderaugen zum Bildschirm und zur Blickmesskamera vorgesehen. Hierbei handelt es sich um eine Kompensation bzw. Korrektur von größeren Kopf- und Augenbewegungen in einer Ebene parallel zum Bildschirm. Desweiteren wird eine "automatische Nachkalibrierung" offenbart. Hierbei handelt es sich um eine rechnerische Anpassung bei Veränderung des Augenabstandes zum Kameraobjektiv (in der Tiefendimension) über die entsprechend veränderte Autofokuseinstellung. Beide Korrekturvorgänge sind jedoch im Sinne der weiter oben gegebenen Definition nicht korrekt mit dem Begriff "Kalibrierung" zu beschreiben. Anders verhält es sich bei der ebenfalls vorgesehenen dynamischen "Rekalibrierung". Zur Korrektur systematischer Messfehler, beispielsweise Pupillendurchmesserveränderungen, wird wiederholt für jeden einzelnen Anwender ein Soll-Istwert-Vergleich an zuvor definierten Gegenstandsobjekten auf dem Bildschirm durchgeführt. Dabei wird die Rekalibrierung bei Überschreiten eines zulässigen Messfehlers automatisch ausgelöst. Abgesehen davon, dass unklar ist, wie ein Überschreiten vom System registriert wird, bedeutet diese dynamische Rekalibrierung eine empfindliche Störung für den Anwender, der sich ständig überraschend - auch aus einer aktiven Anwendung heraus - einem erneuten Kalibriervorgang unterziehen muss.

Insgesamt ist also festzustellen, dass die bekannten Kalibriermethoden bei dem Verfahren zur Bestimmung der Blickrichtung eine wesentliche Komforteinschränkung für den Anwender bedeuten. Zum einen muss er eine hohe Konzentration und viel Geduld bei der Fixation der Kalibrierpunkte, die zudem noch bewegt sein können, aufbringen. Zum anderen müssen verschiedene Anwender eines Blickrichtungsmesssystems zur Gewährleistung ihrer individuellen Kalibrierdaten vor einer Benutzung jeder einen eigenen aufwendigen Kalibriervorgang durchführen. Die **Aufgabe** für die vorliegende Erfindung ist daher darin zu sehen, ein gegenüber dem bekannten Stand der Technik verbessertes Verfahren zur Bestimmung der Blickrichtung anzugeben, bei dem eine Kalibrierung integriert ist, die zum einen eine maximale Genauigkeit für die Vermessung der Blickrichtung, insbesondere mit einer Rekalibrierung zur Korrektur von systematischen Messfehlern, garantiert, zum anderen aber auch eine minimale Belastung für den individuellen Anwender bedeutet. Darüberhinaus soll es auch einer Mehrzahl von individuellen Anwendern möglich sein, ohne eine Kalibrierbelastung das System zur Blickrichtungsbestimmung benutzen zu können. Neben einer verringerten Belastung für den Anwender ist auch eine verringerte Belastung für das Messsystem anzustreben, was bedeutet, dass die Kalibrierung ohne großen Rechenaufwand oder zusätzliche aufwendige Systemkomponenten umzusetzen ist.

Zur **Lösung** dieser Aufgabe ist deshalb bei einem- rechnerunterstützten Verfahren zur berührungslosen, videobasierten Blickrichtungsbestimmung eines Anwenderauges für die augengeführte Mensch-Computer-Interaktion der eingangs beschriebenen Art erfindungsgemäß vorgesehen, dass mit der Kalibrierung ein Referenzaugen-Datensatz als Zusammenhang zwischen den Augenvektoren eines beliebigen Referenzauges und dem zumindest einen Fixationspunkt einmalig erstellt und abgespeichert wird und die Rekalibrierung für jeden aktuellen Anwender bei einer willkürlichen Betrachtung zumindest eines Attraktors als Bildobjekt ohne dessen aktive Beteiligung durch eine selbstabgleichende Bestimmung der individuellen Augenvektoren des jeweiligen Anwenderauges und unter Erstellung und Abspeicherung einer Transformationsfunktion zur Anpassung der Referenzaugenvektoren an die aktuellen Anwenderaugenvektoren erfolgt.

Bei dem erfindungsgemäßen Messverfahren werden Kalibrierung und Rekalibrierung zeitlich völlig voneinander getrennt und auf unterschiedliche Anwender bezogen. Die eigentliche Kalibrierung hat hierbei nunmehr den Charakter eines initialen, referenzbildenden Vorgangs, der nur ein einziges Mal zu Beginn der Messungen durchzuführen ist. Der dabei zu betreibende Aufwand entspricht zwar dem Aufwand für bekannte Verfahren mit einer zeitabhängigen Fixation von verschiedenen beliebigen Kalibrierpunkten unter Berücksichtigung aller System- und Verfahrensparameter. Hiermit wird jedoch nur eine einzige Person in der Rolle einer "Referenzperson" einmalig belastet. Diese Referenzperson besitzt die "Referenzaugen", auf die das Messverfahren durch die Ermittlung von den Referenzaugenvektoren zunächst eingestellt-kalibriert - wird. Hierbei handelt es sich also nicht um sogenannte "Standardaugen", die durchschnittlich ermittelte Standardabmessungen aufweisen, sondern um Augen einer beliebigen Person.

Die individuelle Rekalibrierung entspricht dann einer Anpassung der referenzbildenden Kalibrierung auf den individuellen Anwender. Hierbei wird dessen physiologische Augengeometrie (Krümmungradii der Hornhaut und des Augapfels) detektiert und berücksichtigt, indem die individuellen Anwenderaugenvektoren bestimmt und in die Referenzaugenvektoren überführt werden.

Die Rekalibrierung erfolgt verfahrensimmanent ohne eine aktive Beteiligung des Anwenders, sodass dieser nicht zusätzlich belastet wird. Zeit und Konzentrationsaufwand werden so eingespart. Lästige und zeitraubende Routinen, in denen der Anwender gezwungen ist, mit starrem Blick hochkonzentriert in vorgegebener Reihenfolge auf eine Mehrzahl von Fixationspunkten zu blicken, entfallen für den individuellen Anwender. Trotzdem ist sicher gewährleistet, dass die Kalibrierdaten immer auf dem neuesten Stand sind, sodass hochgenaue Messergebnisse erzielbar sind. Um eine Mehrzahl von Augenvektoren in kürzester Zeit für die Transformation zu erhalten, sind viele Reflexpunkte auf der Hornhaut erforderlich. Diese werden bei nur einem Fixationspunkt ohne Belastung für den Anwender durch eine entsprechende Anzahl von Infrarotlichtquellen erzeugt. Schaut der Anwender unwillkürlich auf den Bildschirm, können so mehrere Augenvektoren zur gleichen Zeit bestimmt werden. Dadurch wird die erforderliche Fixationszeit wesentlich reduziert. Ein Attraktor, dessen Koordinaten dem System bekannt sind, hilft dabei, den Blick des Anwenders auf den Bildschirm zu ziehen. Es wird dabei davon ausgegangen, dass der Anwender, wenn er auf den Bildschirm blickt, auch den Attraktor betrachtet. Dabei fühlt er sich weder beansprucht noch gelangweilt, er folgt mehr einem "Neugierreflex".

Zusammenfassend gesehen ist die Rekalibrierung bei dem erfindungsgemäßen Verfahren also kein expliziter Kalibriervorgang, bei dem der Anwender -aufgefordert wird, bewusst etwas zu tun, sondern vielmehr ein Selbstabgleich in Form einer automatischen Auswertung der unwillkürlichen Aktionen des Anwenders ohne dessen Belastung. Damit wird mit der Erfindung ein "einfaches" Messverfahren - vergleichbar mit den Verfahren mit standardisierter Kalibrierung - geschaffen, das aber die Messgenauigkeit eines "aufwendigen" Messverfahrens - mit wiederholter Kalibrierung - aufweist.

Bei dem bekannten Verfahren, von dem die Erfindung ausgeht, erfolgt die Rekalibrierung unter Inkaufnahme der Anwenderstörung grundsätzlich dynamisch in Abhängigkeit von einer festgestellten Fehlerüberschreitung. Da im Gegensatz zu dieser bekannten Rekalibrierung die Rekalibrierung bei dem erfindungsgemäßen Verfahren dem individuellen Anwender nicht bewusst wird, ist es vorteilhaft, wenn entsprechend einer Erfindungsweiterbildung die Rekalibrierung zur Korrektur der systematischen Messfehler dynamisch erfolgt. So ist sicher gewährleistet, dass sowohl für einen einzelnen Anwender bei einer längeren Nutzungszeit, in der Ermüdungserscheinungen auftreten können, als auch für verschiedene Anwender, die eine Anmeldung bei dem System unterlassen haben, die Blickrichtungsbestimmung stets genau kalibriert ist. Dabei sind die Zeitabstände der Wiederkehr der dynamischen Rekalibrierung anwendungsspezifisch.

Nach einer nächsten Fortführung des erfindungsgemäßen Verfahrens, wird die Transformationsfunktion als Mappingfunktion durch Anwendung der Least-Square-Fitting-Technik ermittelt und abgespeichert. Bei der Least-Square-Fitting (LSF)-Methode handelt es sich um eine allgemein bekannte Methode (vgl. z.B. "Numerical Recipes in C", W.H.Press et al., Cambridge University Press, 1990, Kapitel 14) zur Minimierung des quadratischen Fehlers eines Gleichungssystems. Nähere Ausführungen hierzu sind im speziellen Beschreibungsteil zu finden.

Weiterhin kann bei der Erfindung vorgesehen sein, dass ein oder mehrere Attraktoren mit konstanter oder veränderlicher, insbesondere abnehmender Größe und stationär oder zufallsweise sprungartig bewegt auf dem Bildschirm darstellbar sind. Wie bereits weiter oben ausgeführt, haben Attraktoren nicht den Charakter von einfachen Kalibrierpunkten, die den Betrachter schnell langweilen. Sie sind vielmehr Darstellungen mit einem phantasiegeprägten Charakter, die die Aufmerksamkeit des neugierigen Anwenders automatisch auf sich ziehen. Dabei muss eine gegenständliche Darstellung nicht gegeben sein. Eine Mehrzahl von Ausführungen ist denkbar, auch mit Veränderungen, Variationen oder Kombinationen.

Alle genannten Verfahren zur Bestimmung der Blickrichtung können von einer festen Kopfposition ausgehen und/oder Kopfbewegungen zulassen. Im Falle einer erlaubten Kopfbewegung ist es daher erforderlich, dass nach einer Fortführung des erfindungsgemäßen Verfahrens Kopfbewegungen, die eine Änderung der Augenvektoren bewirken, bei der Messwertbestimmung durch Miterfassung der aktuellen Kopfposition kompensiert werden. Die daraus abgeleiteten Augenvektoren werden dann in Vektoren mit den festen Bildschirmkoordinaten transformiert. Zu diesem Vorgehen existieren bereits eine Reihe von bekannten Verfahren (vgl. insbesondere DE 197 36 995.2 A1, DE 197 31 303 A1 (hier belegt mit dem Begriff einer "automatischen Nachkalibrierung" bei Abstandsänderungen des Betrachterauges zum Fixationspunkt durch Kopfbewegungen) oder auch den Aufsatz "Eye and gaze tracking for visually controlled interactive stereoscopic displays" von Talmi, Liu; Elsevier/Signal Processing : Image Communication 14 (1999) 799-810, Kap. 4.3.).

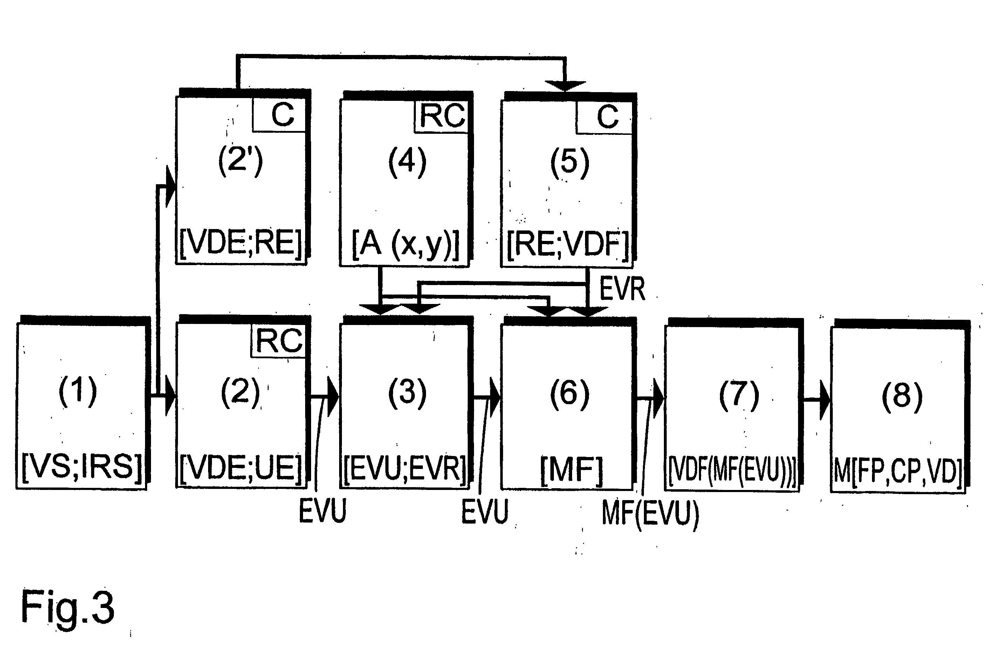

Neben dem erfindungsgemäßen Verfahren selbst wird auch eine Vorrichtung zu dessen Durchführung beansprucht mit den für die vorgesehene Kalibrierung erforderlichen System-Komponenten : (1) Blickrichtungs-Sensor und Infrarotbeleuchtung, (2) Blickdetektor, (3) Auswerter, (4) Attraktorerzeuger, (5) Referenzdaten- und Blickrichtungsfunktionsspeicher, (6) Umwandler und Mappingfunktionsspeicher, (7) Blickrichtungsermittler und (8) Bildschirm. Bevorzugte Ausführungsformen zu den Systemkomponenten sind den nachgeordneten Unteransprüchen zu entnehmen. Um Wiederholungen im Zusammenhang mit dem Systemaufbau und der Funktion seiner einzelnen Komponenten zu vermeiden, wird auf den anschließenden speziellen Beschreibungsteil, insbesondere Figur 3, verwiesen.

Das erfindungsgemäße Verfahren und eine bevorzugte Vorrichtung zu seiner Durchführung werden nachfolgend anhand der schematischen **Figuren** näher erläutert. Dabei zeigt:

**Figur 1** die Augengeometrie für das bekannte Prinzip der Comea-Reflex-Methode,
**Figur 2** ein Strukturbild des erfindungsgemäßen Verfahrens und
**Figur 3** ein Strukturbild der für die Kalibrierung erforderlichen Systemkomponenten einer Messanordnung.

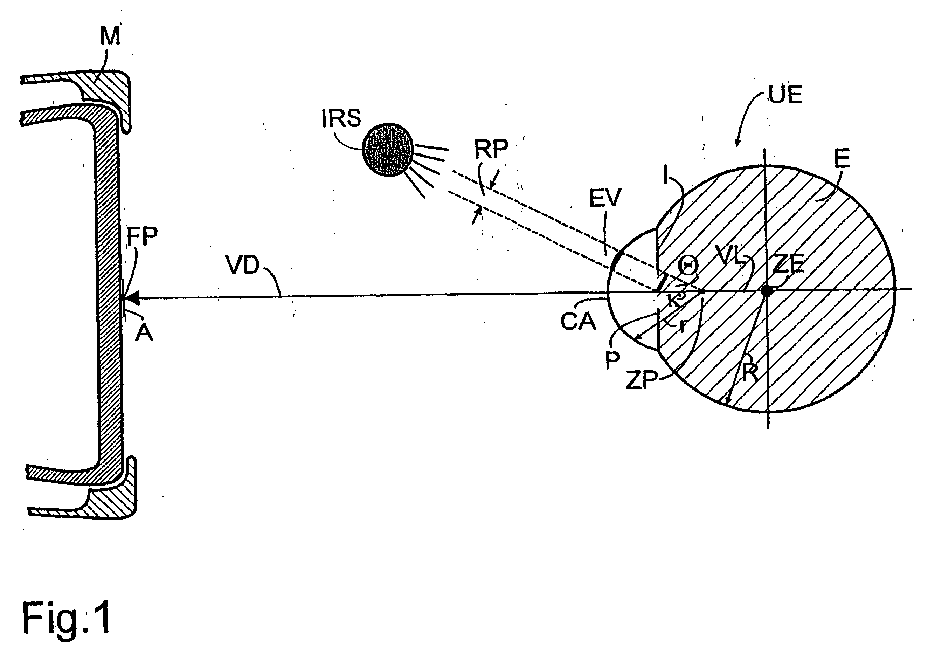

In der **Figur 1** ist ein vereinfachtes Modell zu Beschreibung des menschlichen Auges dargestellt, an dem die Grundlagen zu dem erfindungsgemäßen Verfahren nach der Comea-Reflex-Methode näher beschrieben werden sollen. Der Augapfel **E** ist nahezu eine Kugel mit einem Drehpunkt **ZE.** Die Hornhaut (Cornea **CA)** liegt auf der vorderen Seite des Augapfels **E** und ihre Oberfläche ist kugelförmig ausgebildet mit einem Radius **r.** Die Iris **I** ist modelliert als eine Kreisscheibe mit einer zentralen Öffnung (Pupille **P)**. Die optische Achse des Auges **E** verbindet den Drehpunkt des Augapfels **ZE** und den Mittelpunkt **ZP** der Pupille **P** und wird als Blicklinie **VL** bezeichnet, deren Richtung (sie zeigt vom Drehpunkt **ZE** zum Pupillenmittelpunkt **ZP)** die Blickrichtung **VD** beschreibt. Beim Wechseln der Blickrichtung **VD** rotiert der Augapfel **E** um seinen Drehpunkt **ZE.** Der Fixationspunkt **FP** ist der Schnittpunkt der Blicklinie **VL** eines Auges **E** mit der Oberfläche des angeblickten Attraktors **A**. Beim normalen beidäugigen Sehen liegt der Fixationspunkt **FP** auch im Schnittpunkt der Blicklinien **VL** beider Augen **E.** Es existiert bereits eine Reihe von Verfahren zur Vermessung der Blickbewegung eines Auges; die Cornea-Reflex-Methode ist die am weitesten-verbreitete Methode zur berührungslosen Blickrichtungsvermessung aus der Entfernung.

Bei der Comea-Reflex-Methode wird die Tatsache benutzt, dass die Comea **CA** das einfallende Licht der Infrarotlichtquelle **IRS** reflektiert und der Comea-Reflex an der Cornea-Oberfläche als ein Glanzpunkt mit dem Öffnungswinkel $\Theta$ gesehen wird Bei einer Blickänderung ändert sich der Augenvektor **EV** (EV = $\kappa$ $\sin\Theta$ mit Hypothenuse $\kappa$) zwischen dem Pupillenmittelpunkt **ZP** und dem Reflexpunkt **RP** monoton zur Blickrichtung **VD.** Seine Größe hängt von der Geometrie des Anwenderauges **UE** ab (Krümmungsradius **r** der Comea **CA**, Radius **R** des Augapfels **E)** und kann durch eine monotone Funktion **VDF** (Blickrichtungsfunktion) beschrieben werden. Die Blickrichtungsfunktion **VDF** läßt sich durch die Kalibrierung ermitteln.

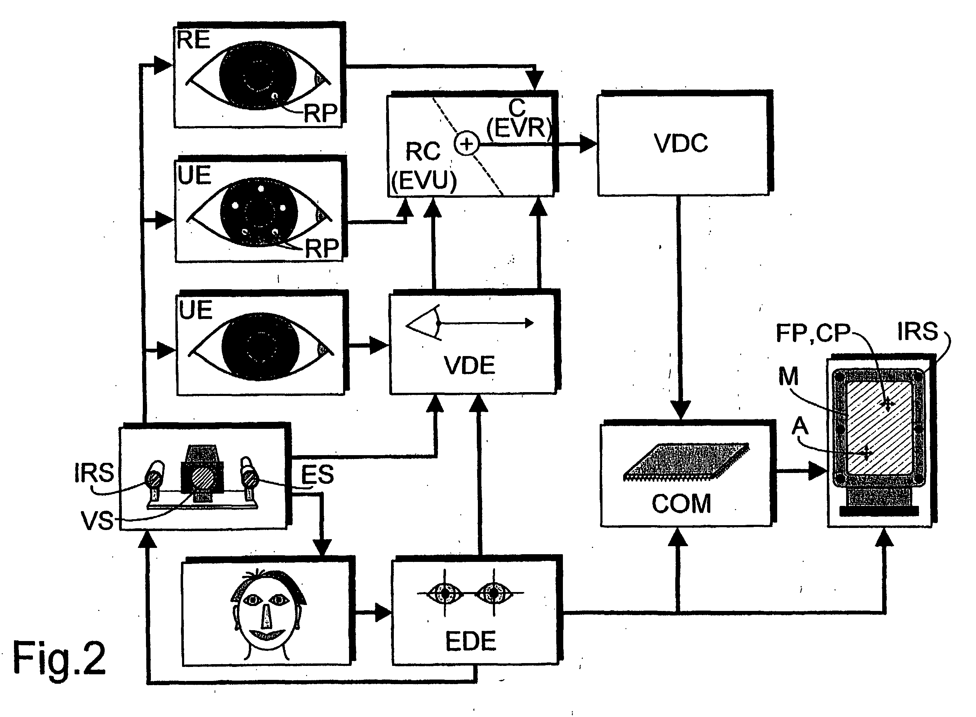

Die **Figur 2** zeigt ein Strukturdiagramm das Zusammenspiel der wesentlichen Verfahrensschritte für das erfindungsgemäße Messverfahren zur Bestimmung der Blickrichtung. Mittels mehrerer Infrarotlichtquellen **IRS** werden dazu auf der Homhaut **CA** eines Anwenderauges **UE** mehrere Reflexpunkte **RP** erzeugt. Diese werden dann von einem Blickrichtungssensor **VS** (Blickkamera) eingefangen, der die Koordinaten an einen rechnergestützten Blickdetektor **VDE** zur Bestimmung der aktuellen Blickrichtung **VD** weiterleitet. Von einem Augenstellungssensor **ES** (Eye- bzw. Headtracker) wird die Kopf- bzw. Augenpositon **HP** registriert und deren Koordinaten an einen rechnergestützten Augendetektor **EDE** weitergeleitet. Der Blickdetektor **VDE** ermittelt daraus dann die Augenvektoren **EV** und danach über die bei einer Kalibrierung **C** ermittelte Blickrichtungsfunktion **VDF** den vom Anwender **UE** aktuell auf einem Bildschirm **M** angeblickten Fixationspunkt **FP**. Die beiden Detektoren **VDE** und **EDE** sind datengekoppelt. Dadurch kann in die Blickrichtungsbestimmung mittels einer entsprechenden Transformationsfunktion automatisch eine Kompensation von Kopfbewegungen aufgrund der vom Augendetektor **EDE** ermittelten absoluten Augenkoordinaten eingehen.

Der in der Figur 2 dargestellte Monitor **M** ist im gewählten Ausführungsbeispiel ein autostereoskopischer Bildschirm für räumliches Sehen ohne Hilfsmittel. Derartige Bildschirme können für augenmausgeführte Systeme eingesetzt werden. Sie müssen jedoch genau auf die Anwenderaugen **UE** ausgerichtet sein, um den Tiefeneindruck zu gewährleisten. Dazu kann der Bildschirm **M** augenstellungsabhängig nachgeführt werden. Die erforderlichen Bildinhalte (verschiedene Perspektiven, Streifenrasterbelegung) werden von einer Recheneinheit **COM** ermittelt.

Wesentlicher Bestandteil der Verfahrens ist die initiale, referenzbezogene Kalibrierung **C.** Hier wird die Transformationsfunktion zwischen den gemessenen Augenvektoren **EV** des Referenzauges RE und den angeblickten Fixationspunkten **FP** auf dem Bildschirm **M** ermittelt (referenzbezogene Blickrichtungsfunktion **VDF**). Dazu werden in einem initialen Messdurchlauf vor Beginn der eigentlichen Messungen mit dem Blickdetektor **VDE** die Pupillenmittelpunkte **ZP** und die Reflexionspunkte **RP** auf der Hornhaut **CA** eines beliebigen Referenzauges **RE** detektiert, die von den entsprechenden Infrarotlichtquellen **IRS** erzeugt werden, während der Referenzanwender **RE** auf Kalibrierpunkte **CP** auf dem Bildschirm **M** blickt. Die Infrarotlichtquellen **IRS** sind neben der Blickmesskamera **VS** und im dargestellten Ausführungsbeispiel auch um den Bildschirm **M** herum angeordnet, sodass eine entsprechende Anzahl von Reflexpunkten **RP** auf dem Referenz- bzw. später Anwenderauge **RE/UE** entstehen. Je höher die Anzahl der unterschiedlichen Kalibrierpunkte **CP** ist, die der Referenzanwender **RE** für eine vorbestimmte Dauer fixieren muss, desto genauer erfolgt die initiale Messwertkalibrierung. Die Messwerte zur Ermittlung der Referenzaugenvektoren **EVR** durchlaufen dabei dieselbe Rechenroutine wie oben beschrieben. Es wird die auf die Referenzaugen **RE** bezogene Blickrichtungsfunktion **VDF (CP, EVR)** ermittelt.

Nach der Durchführung der initalen, referenzbezogenen Kalibrierung **C** ist das Messsystem zunächst auf das Referenzauge **RE** kalibriert. Zu Beginn der Nutzung des Messsystems durch einen individuellen Anwender **UE** erfolgt dann ein automatischer Abgleich der Referenzdaten aufgrund einer systemimmanenten Rekalibrierung **RC.** Dabei wird das Anwenderauge **UE** mit einer Vielzahl von Infrarotlichtquellen **IRS,** die um den Monitor **M** herum angeordnet sind, bestrahlt, sodass eine entsprechende Anzahl von Reflexpunkten **RP** auf dem Anwenderauge **UE** entstehen. Der Anwender **UE** muss zu deren Detektion nurmehr unwillkürlich kurzzeitig auf einen einzigen Attraktor **A** auf dem Bildschirm **M** schauen. Dabei werden die individuellen Augenvektoren **EVU** ermittelt und in die Referenzaugenvektoren **EVR** transformiert. Die dadurch bestimmbare Transformationsfunktion wird als Mappingfunktion **MF** bezeichnet. Das Messsystem ist nunmehr auf den aktuellen Anwender **UE** rekalibriert und bereit, genaueste Ergebnisse bei der Vermessung der aktuellen Blickrichtung **VD** des Anwenders **UE** zu liefern, sodass eine hohe Ortsauflösung bei der Blickpunktbestimmung erreicht werden kann. Während der Messungen werden die momentan angeblickten Fixationspunkte **FP** auf dem Bildschirm **M** dann mittels der Blickrichtungsfunktion **VDF** und der Mappingfunktion **MF** bestimmt: **FP = VDF (MF (EVU)).**

Im Zusammenhang mit der Beschreibung des Kalibriervorganges soll an dieser Stelle noch vertiefend auf die dem Vorgang zugrunde liegende Least-Square-Fitting-Technik (LSF-Technik) eingegangen werden.

- Definitionen :

   Augenvektor EV mit den Komponenten $(a_x, a_y)$, gemessen auf dem Augenbild.
   Fixationspunkt FP (oder Kalibrierpunkt) $(f_x, f_y)$, gemessen auf dem Bildschirm
   Blickrichtungsfunktion VDF : erstellt den Zusammenhang zwischen EV und FP,
   Eigenschaften von VDF : monoton und eindeutig.

- Annahmen :

   I) Die VDF ist eine lineare Funktion. Der Zusammenhang lässt sich dann formulieren zu

$$f_x = c_0 + c_1 a_x + c_2 a_y$$

   und

$$f_y = c_3 + c_4 a_x + c_5 a_y$$

   Die Koeffizienten $\{c_i\}$, i = 0,....,5, lassen sich im Kalibriervorgang mit einer entsprechenden Anzahl von Kalibrierpunkten bestimmen. oder
   II) Die VDF ist ein quadratische Funktion. Der Zusammenhang lässt sich dann formulieren zu :

$$f_x = c_0 + c_1 a_x + c_2 a_y + c_3 a_x a_y + c_4 a_x^2 + c_5 a_y^2$$

   und

$$f_y = c_6 + c_7 a_x + c_8 a_y + c_9 a_x a_y + c_{10} a_x^2 + c_{11} a_y^2$$

   Die Koeffizienten $\{c_i\}$, i = 0,....,11, lassen sich wiederum im Kalibriervorgang mit einer entsprechenden größeren Anzahl von Kalibrierpunkten bestimmen.
- Auflösen nach den Koeffizienten $c_i$
   Für die Annahme I) sind mindestens 3 Messpunkte erforderlich (2 Gleichungen x 3 Messpunkte für 6 Gleichungen mit 6 Unbekannten). Wegen auftretendem Messrauschen sind jedoch mehr als 3 Mess- bzw. Kalibrierpunkte zu wählen (im gewählten Beispiel sind es 5 Punkte).
   Unter der Annahme der Bekanntheit der EV $(a_{xj}, a_{yj})$ und $(f_{xj}, f_{yj})$ werden die FP bzw. CP berechnet:

$$c_0 + c_1 a_{xj} + c_2 a_{yj} = f'_{xy} \neq f_{xj} \qquad j = 1,....5$$

$$c_3 + c_4 a_{xy} + c_5 a_{yj} = f'_{yj} \neq f_{yj}$$

Die LSF besagt nun, dass der quadratische Fehler minimiert werden soll :

$$F = \Sigma(j=1..5)\ (c_0 + c_1 a_{xj} + c_2 a_{yj} - f_{xj})^2 + \Sigma(j=1..5)\ (c_3 + c_4 a_{xj} + c_5 a_{yj} - f_{yj})^2$$

Die $\{c_i\}$, $i = 0,....,5$ sind bei bekannten EV zu bestimmen. Dazu wird F nach den Koeffizienten c; abgeleitet, die durch Lösung der Gleichungssysteme (z.B: nach der "Singular Value Decomposition"-Methode) dann bestimmbar sind. Für die Annahme II sind mindestens 6 Messpunkte erforderlich. Der Lösungsweg ist identisch.

Dieselbe Technik wird auch angewendet, um die Mappingfunktion **MF,** die die Daten **EVU** an die **EVR** anpasst, zu berechnen. Dabei sind (ax,ay) die Komponenten des Referenzaugenvektors **(EVR),** gemessen auf dem Augenbild der Referenzperson, und (fx,fy) die Komponenten des Anwenderaugenvektors (**EVU**), gemessen auf dem Augenbild des Anwenders. Die Mappingfunktion MF erstellt dann den Zusammenhang zwischen **EVR** und **EVU,** der durch die Koeffizienten {ci} zu bestimmen ist.

In **Figur 3** ist ein Strukturbild der für die Kalibrierung erforderlichen Systemkomponenten einer bevorzugten Messanordnung dargestellt. Im folgenden sollen die einzelnen Komponenten auch im Hinblick auf vorteilhafte Vorrichtungsausgestaltungen gemäß den Unteransprüchen näher erläutert werden.

**Komponente (1) Blickrichtungssensor und Infrarotlichtquellen :**

Zur Messung der Blickrichtung **VD** wird als Blickrichtungssensor **VS** eine Videokamera mit langer Brennweite verwendet. Sie erfasst das Auge formatfüllend. Die Lichtquellen **IRS** sind neben der Kamera und/oder um den Bildschirm **M** herum fest montiert. Im dargestellten System wird eine Infrarotlichtquelle **IRS** neben der Kamera und weitere vier werden neben dem Bildschirm **M** (an den 2, 4, 8 und 10 Uhrzeiger-Positionen) platziert. Die günstigste Platzierung sowie auch die Anzahl der Lichtquellen **IRS** hängt von der Anwendung ab und kann variiert werden.

**Komponenten (2) und (2') Blickdetektor :**

Der Blickdetektor **VDE** hat die Aufgabe, aus den Bilddaten des Blickrichtungssensors die Augenvektoren (**EVR, EVU**) zu bestimmen. Es wird die bekannte Comea-Reflex Methode verwendet. Die Mittelpunkte der Pupille und der Glanzpunkte im Kamerabild werden detektiert. Von dem Pupillenmittelpunkt **ZP** aus wird zu jedem Glanzmittelpunkt **RP** der Augenvektor EV bestimmt. Es können zur gleichen Zeit maximal so viele Augenvektoren **EV** wie verwendete Infrarotlichtquellen **IRS** bestimmt werden. Bei der erstmaligen Benutzung des Systems sowie nach Änderungen der Systemkonfiguration müssen die Referenzaugenvektoren **EVR** neu gemessen werden (Komponente 2'). In einem Kalibriervorgang, in dem die Referenzperson **RE** nacheinander auf verschiedene Kalibrierpunkte **CP** schaut, wird die Blickrichtungsfunktion **VDF** ermittelt. Die Funktion **VDF** wird im einem Referenzdatenspeicher (Komponente 5) gespeichert. Während ein Anwender **UE** das System benutzt, ermittelt der Blickdetektor **VDE** die Augenvektoren **EVU** des Anwenders **UE** (Komponente 2).

**Komponente (3) Auswerter:**

Der Auswerter vergleicht die Referenzaugenvektoren **EVR** mit den Anwenderaugenvektoren **EVU** und entscheidet, ob der Anwender in die Bildschirmrichtung blickt. Wenn nein (**EVU** und **EVR** unterscheiden sich deutlich), werden die **EVU** zurückgewiesen. Wenn ja (**EVU** weichen nur geringfügig von den **EVR** ab), wird hier angenommen, dass der Blick den Attraktor **A** auf dem Bildschirm **M** fixiert. Die **EVU** werden dann an die weitere Bearbeitungsstufe (Komponente 6) weitergeleitet.

**Komponente (4) Attraktorerzeuger:**

Der Attraktor **A** ist ein graphisches Objekt ("Reizobjekt"), das einen oder mehrere visuelle Reizpunkte auf dem Bildschirm **M** erzeugt und unwillkürlich den Blick des Anwenders **UE** auf sich zieht. Das Reizobjekt sollte sich sprungartig auf dem Bildschirm **M** bewegen. Es sollte am Anfang größer sein, um die Aufmerksamkeit auf sich zu ziehen, und dann kleiner werden, um die Messgenauigkeit zu erhöhen. Seine aktuelle Position (**x,y**) auf dem Bildschirm wird an den Auswerter (3) und den Umwandler (6) weitergegeben.

**Komponente (5) Referenzdaten- und Blickrichtungsfunktionsspeicher :**

Hier sind die Augenvektoren **EVR** des Referenzauges **RE** für mehrere vorgegebene Augenstellungen gespeichert. Die entsprechende Kopfposition **HP** muss bekannt sein (fixiert oder on-line getrackt). Die Referenzaugenvektoren **EVR** für eine beliebige Augenstellung werden aus den bekannten Vektoren interpoliert. Aus den EVR wird die Blickrichtungsfunktion VDF ermittelt.

### Komponente (6) Umwandler und Mappingfunktionsspeicher :

Der Umwandler transformiert die Anwender-Augenvektoren **EVU** in die Referenz-Augenvektoren **EVR,** die bereits im System als Referenzdaten gespeichert sind (5). Hier wird die Least-Square-Fitting Technik angewendet, um die Daten **EVU** an die **EVR** anzupassen. Die dabei ermittelte Mappingfunktion **MF,** deren Form an die Systemparameter (Anzahl der Infrarotlichtquellen **IRS** und gewählte Art des Attraktors **A**) anzupassen ist, wird gespeichert. Die Referenz-Augenvektoren **EVR** liefern Werte für die Augenstellung, in der das Auge auf das Reizobjekt blickt und bei der die Anwender-Augenvektoren **EVU** gemessen werden. Die Art und Weise der LSF-Technik sowie die Menge der Stichproben von Augenvektoren sind nicht festgelegt. Es ist sinnvoll, dass sie jeweils aus mehreren Messungen stammen.

### Komponente (7) Blickrichtungsermittler :

Der Blickrichtungsermittler **VDC** hat die Aufgabe, die ermittelten Augenvektoren **EV** mit Hilfe der Blickrichtungsfunktion **VDF** in die angeblickten Fixationspunkte **FP** und damit in die aktuelle Blickrichtung **VD** des aktuellen Anwenders umzurechnen. Zur Umrechnung können ein oder mehrere Augenvektoren verwendet werden. Die entsprechende Blickrichtungsfunktion **VDF**, die im System gespeichert (5) und mittels des Referenzauges **RE** ermittelt wird, ist anzuwenden.

### Komponente (8) Bildschirm:

Auf dem Bildschirm **M** werden die unterschiedlichen Fixations- und Kalibrierpunkte **FP, CP** sowie Attraktoren **A** dargestellt. Er ist generelles Ziel der Blickrichtung des Anwenders **UE** und kann als autostereoskopischer 3D-Bildschirm ausgeführt sein.

### Bezugszeichenliste

| | |
|---|---|
| A | Attraktor |
| C | Kalibrierung |
| CA | Cornea (Hornhaut) |
| COM | Recheneinheit |
| CP | Kalibrierpunkt |
| E | Augapfel |
| EDE | Augendetektor |
| ES | Augenstellungssensor |
| EV | Augenvektor |
| EVR | Referenzaugenvektor |
| EVU | Anwenderaugenvektor |
| FP | Fixationspunkt |
| HP | Kopf- bzw. Augenpositon |
| I | Iris |
| IRS | Infrarotlichtquelle |
| M | Bildschirm |
| MF | Mappingfunktion |
| P | Pupille |
| r | Radius von CA |
| R | Radius von E |
| RC | Rekalibrierung |
| RE | Referenzauge, Referenzanwender |
| RP | Reflexpunkt |
| UE | Anwenderauge, Anwender |
| VD | Blickrichtung |
| VDE | Blickdetektor |

VDF     Blickrichtungsfunktion
VL      Blicklinie
VS      Blickrichtungssensor
VDC     Blickrichtungsermittler
ZE      Drehpunkt von E
ZP      Pupillenmittelpunkt
$\Theta$      Öffnungswinkel
$\kappa$      Hypothenuse

## Patentansprüche

1. Rechnerunterstütztes Verfahren zur berührungslosen, videobasierten Blickrichtungsbestimmung eines Anwenderauges (UE) für die augengeführte Mensch-Computer-Interaktion nach dem Comea-Reflex-Verfahren, mit dem blickrichtungsabhängige Augenvektoren (EV) zwischen dem detektierbaren Pupillenmittelpunkt (ZP) und durch gerichtete Infrarotbeleuchtung (IRS) erzeugbaren, ebenfalls detektierbaren Reflexpunkten (RP) auf der Augenhornhaut (CA) bestimmt werden, mit einer Kalibrierung (C) auf zumindest einen auf dem Bildschirm (M) darstellbaren Kalibrierpunkt (CP) zur Bestimmung einer Blickrichtungsfunktion (VDF) und einer in Abhängigkeit von der Erzeugung von Bildobjekten und mehreren Reflexpunkten (RP) durchzuführenden Reakalibrierung (RC) zur Korrektur systematischer Messfehler,
   **dadurch gekennzeichnet, dass**
   mit der Kalibrierung (C) ein Referenzaugen-Datensatz als Zusammenhang zwischen den Augenvektoren (EVR) eines beliebigen Referenzauges (RE) und dem zumindest einen Kalibrierpunkt (CP) einmalig erstellt und abgespeichert wird und die Rekalibrierung (RC) für jeden aktuellen Anwender (UE) bei einer willkürlichen Betrachtung zumindest eines Attraktors (A) als Bildobjekt ohne dessen aktive Beteiligung durch eine selbstabgleichende Bestimmung der individuellen Augenvektoren (EVU) des jeweiligen Anwenderauges (UE) und unter Erstellung und Abspeicherung einer Transformationsfunktion (MF) zur Anpassung der Referenzaugenvektoren (EVR) an die aktuellen Anwenderaugenvektoren (EVU) erfolgt.

2. Verfahren nach Anspruch 1,
   **dadurch gekennzeichnet, dass**
   die Rekalibrierung (RC) zur Korrektur der systematischen Messfehler dynamisch erfolgt.

3. Verfahren nach Anspruch 1 oder 2,
   **dadurch gekennzeichnet, dass**
   die Transformationsfunktion als Mappingfunktion (MF) durch Anwendung der Least-Square-Fitting-Technik ermittelt und abgespeichert wird.

4. Verfahren nach mindestens einem der Ansprüche 1 bis 3,
   **dadurch gekennzeichnet, dass**
   ein oder mehrere Attraktoren (A) mit konstanter oder veränderlicher, insbesondere abnehmender Größe und stationär oder zufallsweise sprungartig bewegt auf dem Bildschirm (M) darstellbar sind.

5. Verfahren nach mindestens einem der Ansprüche 1 bis 4,
   **dadurch gekennzeichnet, dass**
   Kopfbewegungen, die eine Änderung der Augenvektoren (EV) bewirken, bei der Messwertbestimmung durch Miterfassung der aktuellen Kopfposition (HP) kompensiert werden.

6. Vorrichtung zur Durchführung des Verfahrens zur kontaktlosen, videobasierten Blickrichtungsbestimmung eines Anwenderauges (UE) für die augengeführte Mensch-Computer-Interaktion nach dem Cornea-Reflex-Verfahren, mit dem blickrichtungsabhängige Augenvektoren (EV) zwischen dem detektierbaren Pupillenmittelpunkt (ZP) und durch gerichtete Infrarotbeleuchtung (IRS) erzeugbaren, ebenfalls detektierbaren Reflexpunkten (RP) auf der Augenhornhaut (CA) bestimmt werden, mit einer Kalibrierung (C) auf zumindest einen auf dem Bildschirm (M) darstellbaren Kalibrierpunkt (CP) zur Bestimmung einer Blickrichtungsfunktion (VDF) und einer in Abhängigkeit von der Erzeugung von Bildobjekten und mehreren Reflexpunkten (RP) durchzuführenden Reakalibrierung (RC) zur Korrektur systematischer Messfehler nach mindestens einem der Ansprüche 1 bis 5 mit den für die Kalibrierung (C, RC) erforderlichen System-Komponenten:

(1) Blickrichtungs-Sensor (VS) und Infrarotbeleuchtung (IRS)

(2) Blickdetektor (VDE)

(3) Auswerter (EVU, EVR)

(4) Attraktorerzeuger (A)

(5) Referenzdaten- und Blickrichtungsfunktionsspeicher (RE, VDF)

(6) Umwandler und Mappingfunktionsspeicher (MF)

(7) Blickrichtungsermittler (VDC)

(8) Bildschirm (M)

**7.** Anordnung nach Anspruch 6,
**dadurch gekennzeichnet, dass**
als Blickrichtungssensor (VS) eine Videokamera mit langer Brennweite und einer formatfüllenden Augenerfassung verwendet wird.

**8.** Anordnung nach Anspruch 6 oder 7,
**dadurch gekennzeichnet, dass**
das die Infrarotbeleuchtung aus einer Mehrzahl einzelner Infrarotlichtquellen (IRS) besteht, die neben dem Blickrichtungssensor (VS) und/oder neben dem Bildschirm (M) angeordnet sind.

**9.** Anordnung nach Anspruch 8,
**dadurch gekennzeichnet, dass**
die einzelnen Infrarotlichtquellen (IRS) an gleichmäßig verteilten Positionen rund um den Bildschirm (M) angeordnet sind.

**Claims**

**1.** Computer-aided method for the contact-free, video-based determination of the viewing direction of a user's eye (UE) for eye-controlled human-computer interaction by the cornea-reflex method with which viewing-direction-dependent eye vectors (EV) between the detectable pupil centre point (ZP) and likewise detectable reflex points (RP) on the cornea (CA) that that can be generated by directional infrared illumination (IRS), having a calibration (C) on at least one calibration point (CR) that can be displayed on the monitor (M) for determining a viewing direction function (VDF) and a recalibration (RC) for correcting systematic measurement errors that can be performed as a function of the generation of image objects and a plurality of reflex points (RP), **characterized in that** a reference eye data record is created and stored once by means of the calibration (C) as the relationship between the eye vectors (EVR) of any reference eye (RE) and the at least one calibration point (CP), and the recalibration (RC) takes place for every actual user (UE) with an arbitrary observation of at least one attractor (A) as image object without the active participation of the latter by a self-aligning determination of the individual eye vectors (EVU) of the respective user eye (UE) and with the creation and storage of a transformation function (MF) for matching the reference eye vectors (EVR) to the actual user eye vectors (EVU).

**2.** Method according to Claim 1, **characterized in that** the recalibration (RC) for correcting the systematic measurement errors takes place dynamically.

**3.** Method according to Claim 1 or 2, **characterized in that** the transformation function is determined and stored as mapping function (MF) by applying the least-square-fitting procedure.

**4.** Method according to at least one of Claims 1 to 3, **characterized in that** one or more attractors (A) can be displayed on the monitor (M) that have constant or variable, in particular decreasing, size in a stationary manner or in a randomly abruptly moving manner.

**5.** Method according to at least one of Claims 1 to 4, **characterized in that** head movements that effect a change in the eye vectors (EV) are compensated for in determining the measured value by also detecting the actual head position (HP).

**6.** Device for performing the method of contact-free, video-based viewing direction determination of a user's eye (UE) for eye-controlled human-computer interaction by the cornea-reflex method with which the viewing-direction-dependent eye vectors (EV) can be generated between the detectable pupil centre point (ZP) and likewise detectable reflex points (RP) on the cornea (CA) that can be generated by directional infrared illumination (IRS), having a calibration (C) on at least one calibration point (CP) that can be displayed on the monitor (M) for determining a viewing-direction function (VDF) and a recalibration (RC) that can be performed as a function of the generation of image objects and a plurality of reflex points (RP) for correcting systematic errors, according to at least one of Claims 1 to 5, having the system components necessary for the calibration (C, RC) :

> (1) viewing-direction sensor (VS) and infrared illumination (IRS),
> (2) view detector (VDE),
> (3) evaluator (EVU, EVR),
> (4) attractor generator (A),
> (5) reference-data and viewing-direction-function memory (RE, VDF),
> (6) converter and mapping-function memory (MF),
> (7) viewing-direction determining device (VDC),
> (8) monitor (M).

7. Arrangement according to Claim 6, **characterized in that** a video camera having a long focal length and a format-filling eye coverage is used as viewing-direction sensor (VS).

8. Arrangement according to Claim 6 or 7, **characterized in that** the infrared illumination comprises a plurality of individual infrared light sources (IRS) that are disposed next to the viewing-direction sensor (VS) and/or next to the monitor (M).

9. Arrangement according to Claim 8, **characterized in that** the individual infrared light sources (IRS) are disposed at uniformly distributed positions around the monitor (M).

**Revendications**

1. Procédé assisté par calculateur pour déterminer, sans contact, la direction du regard basé sur un système vidéo, d'un oeil d'observateur (UE) pour l'interaction homme-ordinateur selon le procédé Cornea-Reflex,
   selon lequel on détermine des vecteurs de l'oeil (EV) dépendant de la direction du regard entre le centre détectable de la pupille (ZP) et des points réflexes (RP) également détectables par un éclairage infrarouge dirigé (IRS), sur la cornée de l'oeil (CA),
   un calibrage (C) sur au moins un point de calibrage (CP) affichable sur l'écran (M) pour déterminer une fonction de direction de vue (VDF) et un recalibrage (RC) effectué en fonction de la génération des objets images et de plusieurs points de réflexion (RP) pour corriger l'erreur systématique,
   **caractérisé en ce que**
   par le calibrage (C) on établit une seule fois un jeu de données de l'oeil de référence comme relation entre les vecteurs de l'oeil (EVR) d'un oeil de référence quelconque (RE) et d'au moins un point de calibrage (CP) et on enregistre et on effectue le recalibrage (RC) pour chaque observateur actuel (EU) lors d'une observation arbitraire d'au moins un attracteur (A) comme objet image sans sa participation active par un accord auto-compensé des vecteurs individuels de l'oeil (EVU) de l'oeil de l'observateur respectif (UE) et après établissement et enregistrement d'une fonction de transformation (MF) pour adapter les vecteurs de l'oeil de référence (EVR) aux vecteurs de l'oeil de l'observateur actuel (EVU).

2. Procédé selon la revendication 1,
   **caractérisé en ce qu'**
   on effectue le recalibrage (RC) pour corriger de façon dynamique l'erreur de mesure systématique.

3. Procédé selon la revendication 1 ou 2,
   **caractérisé en ce que**
   la fonction de transformation est une fonction de carte (mapping) (MF) obtenue par l'application de la technique d'adaptation des moindres carrés et mise en mémoire.

4. Procédé selon au moins l'une des revendications 1 à 3,
   **caractérisé par**
   un ou plusieurs attracteurs (A) de taille constante ou variable notamment de taille qui diminue et qui sont déplacés de façon stationnaire ou par sauts aléatoires, sur l'écran (M).

**5.** Procédé selon au moins l'une des revendications 1 à 4,
**caractérisé en ce qu'**
on compense les mouvements de la tête produisant une modification des vecteurs de l'oeil (EV) en déterminant la valeur de mesure par la saisie également de la position actuelle de la tête (HP).

**6.** Dispositif pour la mise en oeuvre du procédé de détermination sans contact et à base vidéo de la direction du regard de l'oeil d'un observateur (UE) pour l'interaction homme-ordinateur guidé par l'oeil, selon le procédé Cornea-Reflex, selon lequel on génère des vecteurs de l'oeil (EV) dépendant de la direction de vue entre le centre de la pupille (ZP) détectable et des points réflexes (RP) également détectables, obtenus par un éclairage infrarouge dirigé (IRS) sur la cornée de l'oeil (CA), avec un calibrage (C) d'au moins un point de calibrage (CP) affiché sur l'écran (M) pour déterminer une fonction de direction de vue (VDF) et un recalibrage (RC) effectué en fonction de la génération des objets images et de plusieurs points de réflexion (RP) pour corriger l'erreur de mesure systématique selon au moins l'une des revendications 1 à 5 et comportant les composants du système nécessaires au calibrage (C, RC) :

   (1) capteur de direction de vue (VS) et éclairage infrarouge (IRS)
   (2) détecteur de regard (VDE)
   (3) moyen d'exploitation (EVU, EVR)
   (4) générateur d'attraction (A)
   (5) mémoire de données de référence et de la fonction de la direction de la vue (RE, VDF)
   (6) convertisseur et mémoire de la fonction de carte (MF)
   (7) moyen de détection de la direction de vue (VDC)
   (8) écran (M).

**7.** Dispositif selon la revendication 6,
**caractérisé en ce que**
le capteur de direction de vue (VS) est une caméra vidéo à grande distance focale et un capteur d'oeil détectant le format.

**8.** Dispositif selon les revendications 6 ou 7,
**caractérisé en ce que**
l'éclairage infrarouge se compose de plusieurs sources de rayonnement infrarouge distinctes (IRS) installées à côté du capteur de direction de vue (VS) et/ou à côté de l'écran (M).

**9.** Dispositif selon la revendication 8,
**caractérisé en ce que**
les différentes sources de lumière infrarouge (IRS) sont prévues dans des positions régulièrement réparties autour de l'écran (M).

Fig:1

EP 1 228 414 B1

Fig.2

Fig.3